# EUROPEAN PATENT SPECIFICATION

(11) **EP 2 634 446 B1**
(45) Date of publication and mention of the grant of the patent: **08.04.2020**
(21) Application number: 12157401.6
(22) Date of filing: 28.02.2012
(51) Int. Cl.: F16D 55/22, F16D 66/00, G01N 3/06

(54) **A cast or forged component with fatigue life indication**
Gegossene oder geschmiedete Komponente mit Angabe der Lebensdauer
Moulage ou composant forgé avec indication de la résistance à la fatigue

(43) Date of publication of application: 04.09.2013
(73) Proprietor: Meritor Heavy Vehicle Braking Systems (UK) Limited, Cwmbran Gwent NP44 3XU (GB)
(72) Inventor: Malki, Refaat, Cwmbran, Gwent NP44 3XU (GB); Williams, Anthony, Cwmbran, Gwent NP44 3XU (GB)
(74) Representative: Foot, Paul Matthew James

(56) References cited:
- EP-A2- 0 653 616
- US-A- 4 322 981
- US-A- 4 365 906
- US-A- 5 789 680
- US-A1- 2004 216 530
- US-A1- 2010 236 875

## Description

The present invention relates to a cast or forged component, in particular a brake component, with fatigue life indication. The present invention further relates to a fatigue life indication arrangement for a brake, and to a cast or forged component with fatigue life indication.

It is known to re-manufacture previously used assemblies and components thereof to maximise the life of such assemblies and components. Re-manufacturing usually involves disassembly and cleaning and inspection of the parts, replacement of seals, fasteners etc, followed by re-assembly. In particular, it is known to re-manufacture brakes for heavy commercial vehicles, or other automotive components such as axles, suspension arms, drive shafts, gearbox housings and engine blocks.

It is desirable to establish the spent fatigue life of a pre-used component, so that the likely remaining fatigue life of that component can be estimated. This is particularly acute in components such as brake caliper housings and bridges that are subjected to repeated and significant stresses during braking operations. There is little value in re-manufacturing components that will not survive for some length of time following re-manufacture. In addition, without establishing the spent fatigue life, it may be difficult to provide a guarantee to customers with respect to the remaining fatigue life of a component.

At present, it may be difficult to establish the spent fatigue life of, for example, a brake prior to re-manufacture. In order to determine spent fatigue life a brake must be examined with equipment during re-manufacture for signs of residual stresses or cracks. This process is costly and time consuming.

Document US4322981A discloses a fatigue detector for a railway car truck.

It is desirable to provide an improved form of fatigue life indication.

According to the present invention there is provided a cast or forged component having a fatigue life indication arrangement comprising a member connected to said component and configured to alter from a first condition to a second condition when a predetermined stage in the component fatigue life is reached. The member is configured to provide a visual indication that the predetermined stage in the component fatigue life has been reached. The component is a brake caliper housing having a cavity and the member is positioned within the cavity of the cast or forged component.

The member may be connected to the brake caliper housing at first and second points. The member may have first and second ends, which may connect to the brake caliper housing at said first and second points.

The member may be integral to the brake caliper housing.

The member may be visibly uncracked in the first condition, and visibly at least partially cracked in the second condition. The member may be proportionally less resistant to fatigue damage than the brake caliper housing, based on said predetermined stage. The member may be of a material less resistant to fatigue damage than the brake caliper housing, or may have a material thickness and/or cross-sectional area less than that of the brake caliper housing.

The member may be integral to the brake caliper housing portion.

The member may be a beam.The beam may be proximate a cover plate, and/or the beam may bridge a gap between a fastener mounting boss and a wall of the housing.

The predetermined stage may be between 30% and 90% of brake caliper housing fatigue life, and may be substantially 50% of brake caliper housing fatigue life.

Other aspects and preferred features of the invention will be apparent from the claims and following description of preferred embodiments made, by way of example only, with reference to the following drawings, in which:
Figure 1 is a perspective view of a brake housing according to a first embodiment of the present invention;
Figure 2 is a cross-sectional view through the brake housing of Figure 1;
Figure 3 is a perspective part cross-sectional view through part of a disc brake component showing a brake housing according to the embodiment of Figures 1 and 2;
Figure 4 is a plan part cross-section view through a prior art disc brake component;
Figure 5 is a side view of a suspension arm;
Figure 6 is a plan view of part of a brake bridge;
Figure 7 is a cross-sectional view through the brake bridge of Figure 6;
Figure 8 is a detail view of a disc brake component according to a further embodiment of the present invention; and
Figure 9 is a detail view of a disc brake component according to yet a further embodiment of the present invention.

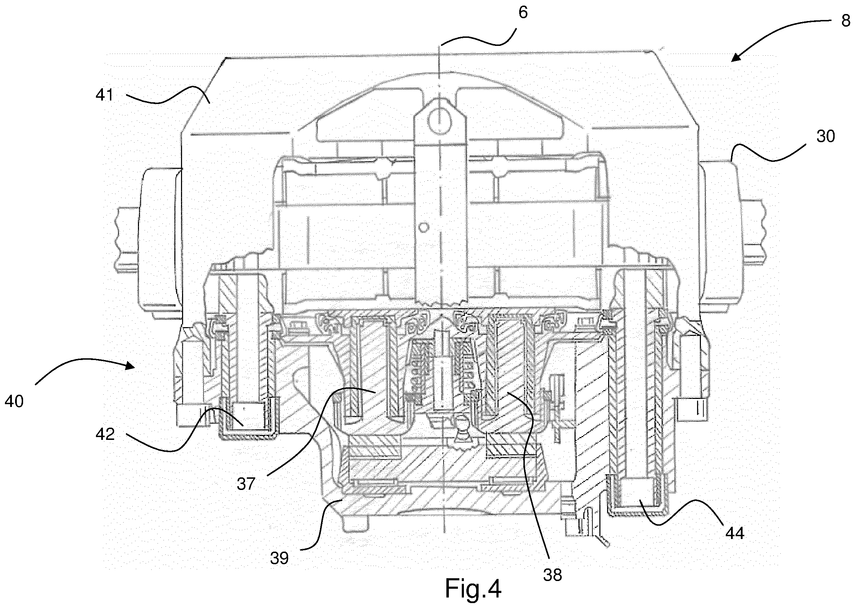

Figure 4 shows one typical type of prior art disc brake: a reaction beam air disc brake, the Meritor air disc brake ELSA 225, indicated generally at 8 in Figure 4. This air disc brake has a brake carrier 30 that carries an outboard brake pad 32 and an inboard brake pad 34. A brake disc 36 is positioned between the two brake pads 32 and 34. Two pistons 37 and 38 are positioned in a caliper 40 and are operable to push the inboard brake pad 34 towards the brake disc 36. The caliper 40 has a housing portion 39 to accommodate actuation components of the brake 8 including the pistons 37 and 38, and a bridge portion 41 connected to the housing portion 39 and extending over the brake disc 36. The brake disc 36 is fixed in an inboard-outboard direction, such that movement along an axis 6 perpendicular to a principal plane of the brake disc is prevented. This arrangement is such that when the inboard brake pad is advanced towards and contacts the brake disc 36, further advancing of the inboard brake pad towards the brake disc causes the caliper to move inboard. As the caliper 40 moves inboard the bridge portion 40 moves the outboard brake pad 32 towards the brake disc 36, clamping the brake disc 36 between the outboard and the inboard pads 32 and 34 and thereby effecting braking by frictionally inhibiting rotation of the brake disc 36. The caliper 40 is able to slide because it is slidably mounted on two guide pins 42 and 44 extending from the carrier. Other types of pneumatic, hydraulic and mechanical disc brakes also have a brake caliper, the caliper being arranged to clamp brake pads to opposite faces of a brake disc.

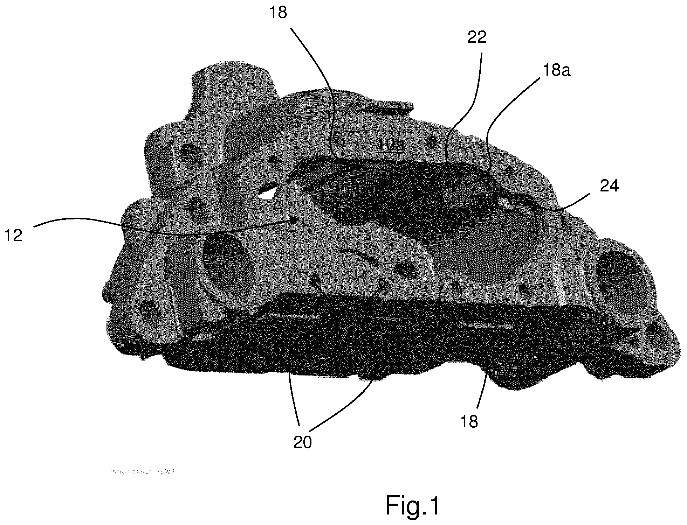

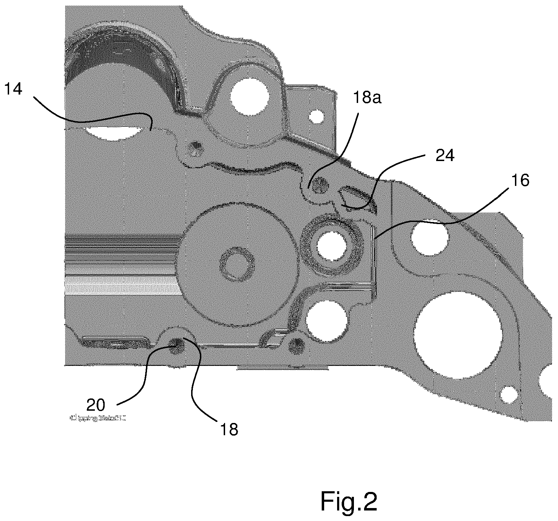

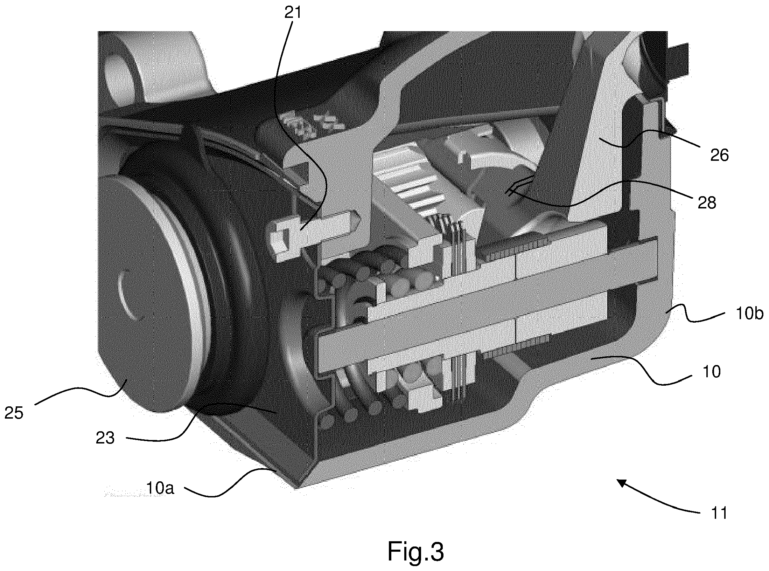

With reference to Figures 1 and 2, a component in the form of a brake housing portion of a caliper according to the present invention is indicated generally at 10. The brake housing 10 is cast and various surfaces then machined. The brake housing 10 is a significant component of an air disc brake 11 (see Figure 3) having a similar layout to that of the disc brake 8 of Figure 4. As positioned in Figure 3, the housing 10 has an outboard end 10a and an inboard end 10b. In alternative embodiments, a brake housing suitable for use with other brake types may be used. The brake housing 10 is an example of a component that can be re-manufactured and re-used.

The brake housing 10 comprises a cavity 12 for housing brake components, as shown in Figure 3, such as brake pistons 25 and an operating shaft 26. The cavity 12 is defined at one side by a housing side wall 14, and at one end by a housing end wall 16. A series of fastener mounting bosses 18 are positioned about the interior of the side wall 14, and define a corresponding series of fastener apertures 20 extending through the outboard end 10a. The end wall 16 defines an opening 22 surrounded by the fastener apertures 20. The bosses 18 and fastener apertures 20 are configured to receive fasteners 21 for attaching a cover plate 23 to the outboard end 10a. The cover plate covers the opening 22 apart from where apertures for pistons are required.

A fatigue indication arrangement for showing the spent fatigue life of the brake housing 10 is provided in the form of a member 24. The member 24 is in this embodiment an elongate beam, substantially cylindrical in cross-section, and extends between one of the bosses 18a and a point on the side wall 14 proximate the boss 18a. The member 24 is in this embodiment in a curved V-shape, though in alternative embodiments it may be otherwise curved or substantially straight. The member 24 may have some cross-section other than circular, for example substantially square, rectangular or x-shaped.

The member 24 of this embodiment is cast with the brake housing 10 so that it is integral to the brake housing 10. The internal sand core (not shown) used to cast the brake housing 10 is configured to cast the member 24 with the remainder of the brake housing 10. The member 24 may be cast as a rib, then machined to create an elongate beam. This requires a simple adaptation to the existing brake housing sand core. As part of the brake housing 10, the member 24 experiences the loads experienced by the remainder of the brake housing 10. Each time the brake is applied, the member 24 experiences load proportional to that experienced by the brake housing 10.

The member 24 is proportionally weaker than other parts of the brake housing 24 as it has a thickness less than that of the remainder of the brake housing 10, so has less strength and toughness. The member 24 therefore suffers damage in the form of one or more cracks or fractures before the design fatigue life of the brake housing 10 is reached in another location. Such cracks may extend partway or fully across the member 24.

As loading of the member 24 is proportional to that of the brake housing 10, damage suffered by the member 24 can be used to give an indication of the spent fatigue life of the brake housing 10.

The member 24 is configured to crack when the predetermined percentage of fatigue life has been reached. In this embodiment the thickness of the material is altered to determine the stage at which damage occurs. A suitable thickness and shape can be determined using finite element analysis (FEA) and/or accelerated testing of sample housings. The positioning of the member 24 proximal the opening 22 and the cover plate makes it easy to inspect once the cover plate has been removed. It can then be seen whether the member 24 is in a first, uncracked condition or in a second, cracked condition. Any significant cracks can easily be seen upon visual inspection, so no additional equipment is required.

The term visual inspection encompasses the use of processes such as dye penetrant inspection to enable cracks to be detected by the naked eye. The member 24 and brake housing 10 are configured such that a crack in the member 24 will not spread to the remainder of the housing, so the overall integrity of the housing 10 should not be affected. Indeed, it is important to note that the member 24 does not contribute to the structural integrity of the component and therefore cracks or fractures therein do not impair the strength of the component.

The member 24 of this embodiment is configured to indicate when approximately 50% of the brake housing fatigue life has been spent. The thickness or shape of the member 24 can be adjusted so that the member 24 is configured to provide an indication of when a higher or lower percentage of the fatigue life has been spent. For example, the member 24 could be configured to provide an indication of when anything between 30% and 90% of the fatigue life has been spent, or even between 10% and 95%.

In alternative embodiments, the member 24 may be of a different material to the remainder of the brake housing 10 in order to provide the requisite difference in strength and/or toughness. In such an embodiment, the member 24 is manufactured independently of the brake housing 10 and attached by e.g. welding to the brake housing 10. The member 24 may be positioned at a different point in the housing 10.

More than one member 24 may be positioned on each component. For example, members configured to crack at different stages of fatigue life, e.g. 25%, 50% and 75% could be used on a component to provide an incremental indication of fatigue life. One or more further members may be fitted to a component on re-manufacture, in order to demonstrate when fatigue life is further or fully spent.

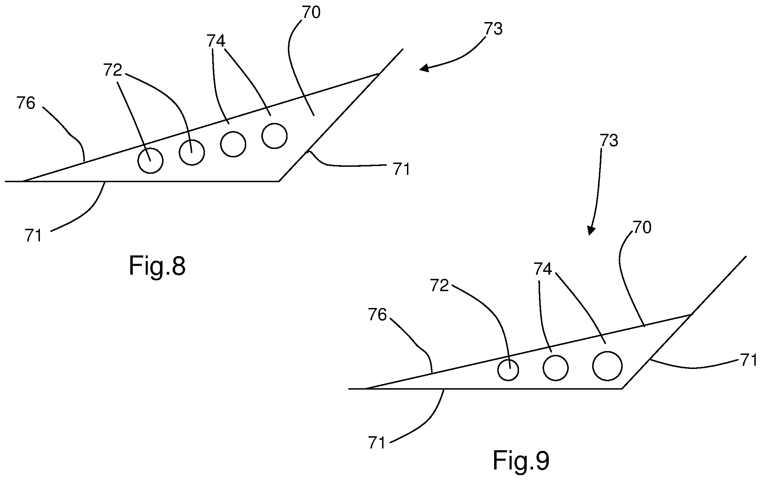

Figures 8 and 9 show alternative embodiments where more than one member is formed in a web or rib 70. In these embodiments the rib 70 extends between two side walls 71 of a brake component 73 e.g. in a similar location to the member 24. The rib 70 has a series of apertures 72 therein such that each member 74 is defined by a portion of the rib 72 separated from the remainder of the rib 72 by an aperture.

Figure 8 shows a rib 70 defining a series of apertures 72 of the same size staggered with respect to a free edge 76 of the rib 70 such that a series of members 74 of progressively increasing size is provided between the free edge 76 and apertures 72. Figure 9 shows a rib 70 defining a series of apertures 72 of varying sizes arranged to provide a series of members 74 of progressively increasing size between the free edge 76 and apertures 72. In both embodiments the series of members 74 are configured to crack at different stages of fatigue life of the component 73 due to their varying size. A means of incremental fatigue life indication is thus provided.

The rib 70 is cast with the remainder of the brake component 73. The apertures 71 are drilled through the rib 70 after casting. In an alternative embodiment, the apertures 71 are cast with the rib 70.

The members are suitable for use with other components. For example, as shown in Figure 3, a member 28 could be positioned on an operating shaft 26. Alternatively, the member 24 could be positioned on a brake carrier, axle, gear housing or engine block, or any other suitable component. One or more members (not shown) could be positioned on an axle component, e.g. extending between parts on an axle casing. For example, the member 24 may extend between mutually angled surfaces on the interior of an axle casing, e.g. between an interior surface and a flange of that surface at the point where a drive assembly is mounted to an axle casing. A member 24 at this point would be protected from e.g. corrosion, whilst being accessible for inspection during disassembly of the axle component.

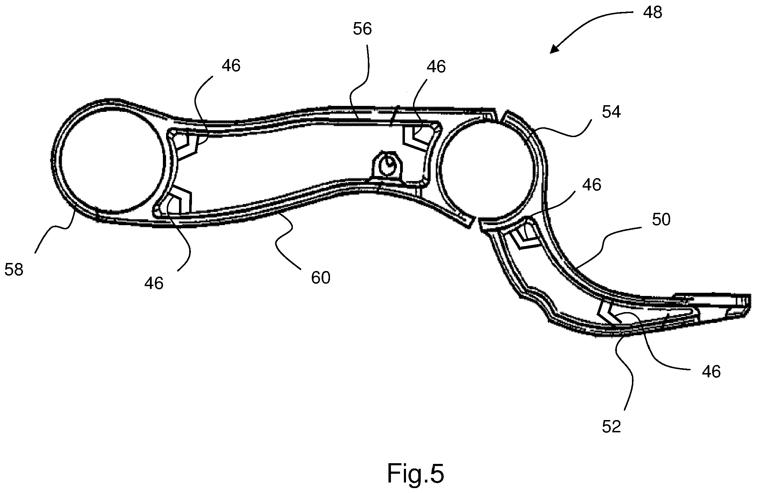

Alternatively, one or more members could be positioned on a suspension arm. Figure 5 shows a number of members 46 positioned on a suspension arm 48 in suitable positions. A member 46 is positioned extending between an upper flange 50 and a lower flange 52. A member 46 extends between an axle wrap portion 54 and the upper flange 50, and another extends between the axle wrap portion 54 and another upper flange 56. Two more members 46 extend from a bearing mounting 58 and the upper flange 56 and a further lower flange 60 respectively.

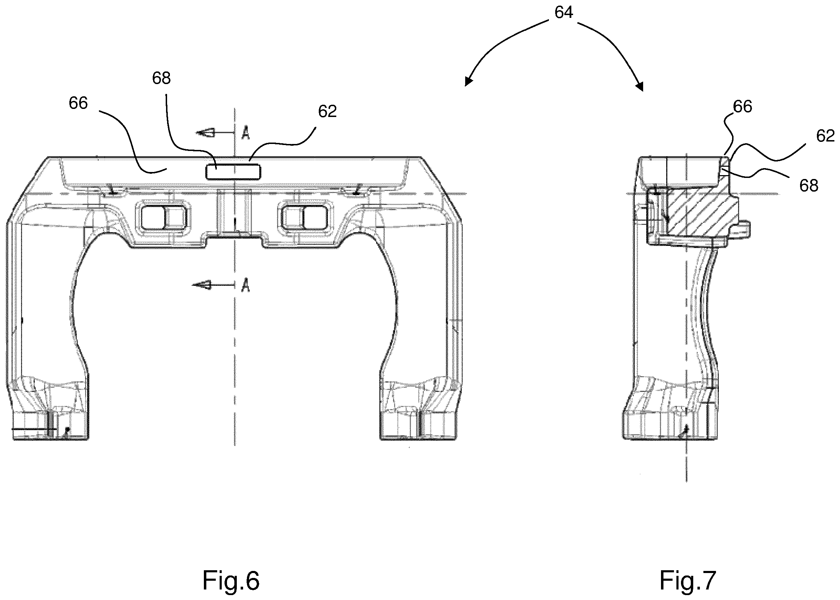

In an alternative embodiment, shown in Figures 6 and 7, a member 62 is integral to a bridge portion 64 of a brake caliper. A reaction beam 66 of the bridge portion 64 defines an aperture 68 configured such that an elongate portion 62 of the reaction beam 66 is separated from the remainder of the beam. The aperture may be formed as part of the casting process, or by machining away cast material after casting. This elongate portion forms the member 62. Fatigue life indication for the bridge portion 64 can thus be provided. The member 24 may in alternative embodiments be attached rather than integral to a bridge portion.

Whilst the present invention has been described in relation to cast components, it will be appreciated that it is also applicable to similar components made by forging.

The member 24, 28 can be formed integral to any cast or forged component where an indication of spent fatigue life is required.

It will be appreciated that in certain applications it may be advantageous to encase the member in a suitable clear resin material to protect it from external damage or corrosion, whilst enabling it to be visually inspected. This is particularly advantageous where the member is externally located.

The member 24 provides an indication that a part is structurally sound from a simple visual inspection. It can demonstrate that, for example, less than 50% of a component's fatigue life has been used. The member 24 is durable and positioned so as to be protected from non-loading forms of wear, e.g. from corrosive fluids so that an accurate idea of spent fatigue life can be obtained. The member 24 is easily visible during standard disassembly that occurs during re-manufacture, so is quick and easy to inspect.

## Claims

1. A cast or forged component having a fatigue life indication arrangement comprising:
a member connected to said component and configured to alter from a first condition to a second condition when a predetermined stage in the component fatigue life is reached, the member being configured to provide a visual indication that the predetermined stage in the component fatigue life has been reached,
**characterised in that** the component is a brake caliper housing having a cavity and the member is positioned within the cavity of the brake caliper housing.

2. A component according to claim 1 wherein the member is connected to the brake caliper housing at first and second points.

3. A component according to claim 1 or claim 2 wherein the member has first and second ends.

4. A component according to any one of claims 1 to 3 wherein in said first condition the member is visibly uncracked, and in said second condition the member is visibly at least partially cracked.

5. A component according to any one of claims 1 to 4 wherein the member is proportionally less resistant to fatigue damage than the brake caliper housing, based on said predetermined stage.

6. A component according to claim 5 wherein the member is of a material less resistant to fatigue damage than the brake caliper housing, or wherein the member has a material thickness and/or cross-sectional area less than that of the brake caliper housing.

7. A component according to any preceding claim wherein the member is integral to the brake caliper housing.

8. A component according to any preceding claim wherein the member is a beam.

9. A component according to claim 8 wherein the beam is proximate a cover plate.

10. A component according to claim 9 wherein the beam bridges a gap between a fastener mounting boss and a wall of the housing.

11. A component according to any preceding claim wherein the predetermined stage is between 30% and 90% of brake caliper housing fatigue life, and preferably 50% of brake caliper housing fatigue life.

## Patentansprüche

1. Gegossene oder geschmiedete Komponente, die eine Anordnung zur Anzeige der Ermüdungslebensdauer aufweist, umfassend
ein Element, das mit der Komponente verbunden und dazu eingerichtet ist, aus einem ersten Zustand in einen zweiten Zustand zu wechseln, wenn ein vorbestimmtes Stadium in der Ermüdungslebensdauer der Komponente erreicht ist, wobei das Element dazu eingerichtet ist, eine visuelle Anzeige zu liefern, dass das vorbestimmte Stadium in der Ermüdungslebensdauer der Komponente erreicht ist,
**dadurch gekennzeichnet, dass** die Komponente ein Bremssattelgehäuse mit einem Hohlraum ist und das Element innerhalb des Hohlraums des Bremssattelgehäuses positioniert ist.

2. Komponente nach Anspruch 1, wobei das Element an einem ersten und einem zweiten Punkt mit dem Bremssattelgehäuse verbunden ist.

3. Komponente nach Anspruch 1 oder Anspruch 2, wobei das Element ein erstes und ein zweites Ende aufweist.

4. Komponente nach einem der Ansprüche 1 bis 3, wobei im ersten Zustand das Element sichtbar ohne Risse ist und im zweiten Zustand das Element mindestens teilweise sichtbar rissig ist.

5. Komponente nach einem der Ansprüche 1 bis 4, wobei das Element basierend auf dem vorbestimmten Stadium proportional weniger widerstandsfähig gegen Ermüdungsschäden als das Bremssattelgehäuse ist.

6. Komponente nach Anspruch 5, wobei das Element aus einem Material besteht, das weniger widerstandsfähig gegen Ermüdungsschäden als das Bremssattelgehäuse ist, oder wobei das Element eine Materialdicke und/oder eine Querschnittsfläche aufweist, die geringer als die des Bremssattelgehäuses ist.

7. Komponente nach einem der vorhergehenden Ansprüche, wobei das Element einstückig mit dem Bremssattelgehäuse ist.

8. Komponente nach einem vorhergehenden Anspruch, wobei das Element ein Träger ist.

9. Komponente nach Anspruch 8, wobei sich der Träger in der Nähe einer Deckplatte befindet.

10. Komponente nach Anspruch 9, wobei der Träger eine Lücke zwischen einem Befestigungsvorsprung und einer Gehäusewand überbrückt.

11. Komponente nach einem vorhergehenden Anspruch, wobei das vorbestimmte Stadium zwischen 30 % und 90 % der Ermüdungslebensdauer des Bremssattelgehäuses und vorzugsweise 50 % der Ermüdungslebensdauer des Bremssattelgehäuses beträgt.

## Revendications

1. Composant moulé ou forgé ayant un agencement d'indication de résistance à la fatigue comprenant :
un élément relié audit composant et configuré pour passer d'un premier état à un second état lorsqu'un stade prédéterminé dans la résistance à la fatigue du composant est atteint, l'élément étant configuré pour fournir une indication visuelle que le stade prédéterminé dans la résistance à la fatigue du composant a été atteint,
**caractérisé en ce que** le composant est un logement d'étrier de frein ayant une cavité et l'élément est positionné à l'intérieur de la cavité du logement d'étrier de frein.

2. Composant selon la revendication 1, dans lequel l'élément est relié au logement d'étrier de frein au niveau de premier et de second points.

3. Composant selon la revendication 1 ou la revendication 2, dans lequel l'élément comporte des première et seconde extrémités.

4. Composant selon l'une quelconque des revendications 1 à 3, dans lequel, dans ledit premier état, l'élément n'est visiblement pas fêlé et, dans ledit second état, l'élément est visiblement au moins partiellement fêlé.

5. Composant selon l'une quelconque des revendications 1 à 4, dans lequel l'élément est proportionnellement moins résistant à un endommagement par fatigue que le logement d'étrier de frein, en se basant sur ledit stade prédéterminé.

6. Composant selon la revendication 5, dans lequel l'élément est composé d'un matériau moins résistant à un endommagement par fatigue que le logement d'étrier de frein ou dans lequel l'élément présente une épaisseur de matériau et/ou une surface de section transversale inférieure à celle du logement d'étrier de frein.

7. Composant selon l'une quelconque des revendications précédentes, dans lequel l'élément est formé d'un seul tenant avec le logement d'étrier de frein.

8. Composant selon l'une quelconque des revendications précédentes, dans lequel l'élément est un profilé.

9. Composant selon la revendication 8, dans lequel le profilé se trouve à proximité d'une plaque de couverture.

10. Composant selon la revendication 9, dans lequel le profilé comble un vide entre un bossage de montage de dispositif de fixation et une paroi du logement.

11. Composant selon l'une quelconque des revendications précédentes, dans lequel le stade prédéterminé est entre 30 % et 90 % de la résistance à la fatigue du logement d'étrier de frein et, de préférence, 50 % de la résistance à la fatigue du logement d'étrier de frein.
